# EUROPÄISCHE PATENTANMELDUNG

(11) **EP 4 383 501 A2**
(43) Veröffentlichungstag der Anmeldung: **12.06.2024**
(21) Anmeldenummer: 23214341.2
(22) Anmeldetag: 05.12.2023
(51) Int. Cl.: H02J 3/24, H02J 3/32, H02J 3/40

(54) **BEREITSTELLUNG VON REGELLEISTUNG BASIEREND AUF EINEM FREQUENZTRIGGER**

(30) Priorität: 08.12.2022 DE 102022132668
(71) Anmelder: RWE Supply & Trading GmbH, 45141 Essen (DE)
(72) Erfinder: Spiecker, Dr. Stephan, 45141 Essen (DE); Schwarz, Dr. Hans-Günter, 45141 Essen (DE); Wannenwetsch, Dr. Jens, 45141 Essen (DE)
(74) Vertreter: Schwenderling, Jens

(57) **Zusammenfassung**

Das erfindungsgemäße Verfahren zur Bereitstellung von Regelleistung 7, insbesondere primärer Regelleistung 7, in ein Wechselspannungsnetz 5 stellt diese aus einem Kombinationskraftwerk 1 aus einem Batteriespeicher 2 und mindestens einem Kraftwerk 3 wie einem Gas- und Dampfturbinenkraftwerk zur Verfügung. Die Abgabe der Regelleistung 7 ist durch einen Frequenztrigger mit einer Triggerfrequenz 17 gesteuert. Liegt eine Abweichung der Frequenz des Wechselspannungsnetz 5 innerhalb eines durch die Triggerfrequenz 17 symmetrisch um die Sollfrequenz 19 aufgespannten Intervalls, erfolgt die Regelleistung 7 durch die Leistungsabgabe 11 des Batteriespeichers 2. Weicht die Frequenz in größerem Umfang von der Sollfrequenz 19 ab, so trägt auch die Leistungsabgabe 12 des Kraftwerks 3 zur Regelleistung 7 bei. Durch diese Strategie wird das Kraftwerk 3 seltener in Leistungsbereichen mit erhöhtem Verschleiß betrieben. Gleichzeitig erlaubt die Bereitstellung der Regelleistung 7 aus der Leistungsabgabe 11 des Batteriespeichers 2 eine schnellere Anpassung der abgegebenen Regelleistung 7 an die basierend auf der Frequenzdifferenz zur Sollfrequenz 19 notwendigen angefragten Regelleistung 6.

## Beschreibung

Gegenstand der vorliegenden Erfindung ist ein Verfahren zum Bereitstellen von Regelleistung, insbesondere primärer Regelleistung, in einem Wechselspannungsnetz zur Regelung der Frequenz des Wechselspannungsnetzes.

Über Wechselspannungsnetze werden Verbraucher wie insbesondere Privathaushalte oder industrielle Stromverbraucher mit Stromerzeugern wie fossilen Kraftwerken, Windstromanlagen oder Solarstromanlagen verbunden. Hierbei weist das Wechselspannungsnetz eine Sollfrequenz auf, die einzuhalten ist. Zu Abweichungen von der Sollfrequenz kann es kommen, wenn das von den Stromerzeugern bereitgestellte Leistungsangebot nicht dem von den Verbrauchern abgenommenem Stromverbrauch entspricht. Um die Stabilität des Netzes über eine Stabilisierung der Frequenz des Wechselspannungsnetzes bei der Sollfrequenz zu gewährleisten, stellen beispielsweise Kraftwerksbetreiber Regelleistung zur Verfügung, mit der die Frequenz des Wechselspannungsnetzes beeinflussbar ist, so dass eine Regelung der Frequenz des Wechselspannungsnetzes auf die Sollfrequenz erfolgen kann.

Zur Bereitstellung von Regelleistung ist es für die Kraftwerksbetreiber möglich, ein Kraftwerk wie beispielsweise ein Gas- und Dampfturbinenkraftwerk außerhalb seiner Nennleistung, also mit einer Überleistung zu betreiben. Dies führt allerdings zu einem gesteigerten Verschleiß bei dem entsprechenden Kraftwerk, da diese auf einen Betrieb bei Nennleistung ausgelegt sind. Gleichzeitig weisen Kraftwerke mit mechanischen Komponenten eine gewisse Trägheit auf, die die Anpassung der bereitgestellten Regelleistung an die angeforderte Regelleistung erschweren beziehungsweise verzögern.

Hiervon ausgehend liegt der vorliegenden Erfindung die Aufgabe zugrunde, die aus dem Stand der Technik bekannten Nachteile zumindest teilweise zu überwinden.

Die Aufgabe wird gelöst mit den Merkmalen des unabhängigen Anspruchs. Die abhängigen Ansprüche sind auf vorteilhafte Weiterbildungen gerichtet.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Das erfindungsgemäße Verfahren zum Bereitstellen einer Regelleistung zum Regeln der Frequenz in einem Wechselspannungsnetz mit einer Sollfrequenz, bei dem die Regelleistung, insbesondere primäre Regelleistung, aus einem Kombinationskraftwerk bereitgestellt wird, welches einen Batteriespeicher und mindestens eines der folgenden Kraftwerke umfasst: A) ein Gasturbinenkraftwerk und B) ein Gas- und Dampfturbinenkraftwerk;
wobei jedes der Kraftwerke eine kraftwerksindividuelle Nennleistung und eine zeitweise abrufbare Überleistung aufweist,
wobei der Batteriespeicher eine Batterieabgabeleistung aufweist, die als Beitrag zur abgegebenen Regelleistung zur Verfügung stellbar ist, wobei für jedes Kraftwerk die Überleistung als Beitrag zur abgegebenen Regelleistung zur Verfügung stellbar ist,
wobei eine Triggerfrequenz definiert wird, die direkt proportional zu einem Quotienten aus der Batterieabgabeleistung und der Summe der Batterieabgabeleistung und der Überleistung aller Kraftwerke des Kombinationskraftwerkes ist,
umfasst die folgenden Schritte:
   a) Bestimmung der Frequenz des Wechselspannungsnetzes;
   b) Bestimmung der Frequenzabweichung durch Bildung der Differenz aus Frequenz und Sollfrequenz;
   c) Vergleich der Frequenzabweichung mit der Triggerfrequenz;
   d) Abgeben beziehungsweise Aufnehmen der Regelleistung durch beziehungsweise im Kombinationskraftwerk, in Abhängigkeit vom Vergleich der Frequenzabweichung mit der Triggerfrequenz,
      - wobei dann, wenn die Frequenzabweichung negativ ist und der Betrag der Frequenzabweichung kleiner ist als die Triggerfrequenz, die Regelleistung aus dem Batteriespeicher zur Verfügung gestellt wird,
      - wobei dann, wenn die Frequenzabweichung negativ ist und der Betrag der Frequenzabweichung die Triggerfrequenz erreicht oder übersteigt, mindestens eines der Kraftwerke mit einer Leistung oberhalb seiner Nennleistung betrieben wird.

Als Wechselspannungsnetz wird hier insbesondere ein Spannungsnetz verstanden, welches zur Versorgung von Verbrauchern wie insbesondere industriellen Stromverbrauchern und Privathaushalten dient. Insbesondere handelt es sich bei dem Wechselspannungsnetz um ein Energieversorgernetz mit einer oder mehreren Spannungsebenen, welches der Versorgung von Kundenanlagen mit elektrischer Energie dient, die beispielweise aus fossilen Kraftwerken, Laufwasserkraftwerken, Pumpspeicherkraftwerken, Photovoltaikanlagen, Windenergieanlagen und/oder Batteriespeichern bereitgestellt wird. Das Wechselspannungsnetz wird mit einer Sollfrequenz betrieben, die beispielsweise in Westeuropa 50 Hz [Hertz] und in Nordamerika 60 Hz beträgt.

Die Frequenz des Wechselspannungsnetz weicht von der Sollfrequenz ab, wenn die in das Wechselspannungsnetz eingespeiste physikalische Leistung nicht der dem Wechselspannungsnetz entnommenen physikalischen Leistung entspricht. Um hier die Frequenz hin zur Sollfrequenz zu regeln, wird Regelleistung in das Wechselspannungsnetz abgegeben oder diesem entnommen.

Grundsätzlich wird heute insbesondere im kontinentaleuropäischen Verbundnetz (bei den Mitgliedern der ENTSO-E, European association for the cooperation of transmission system operators for electricity) bei der Frequenzregelung zwischen primärer Regelleistung oder Primärregelleistung (auch FCR, Frequency Containment Reserve), sekundärer Regelleistung oder Sekundärregelleistung (auch automatic Frequency Restoration Reserve, aFRR) und tertiärer Regelleistung, Tertiärregelleistung oder Minutenreserve unterschieden. Die Bereitstellung dieser Regelleistungen dient dazu, Ungleichgewichte zwischen physikalischem Leistungsangebot und physikalischer Leistungsnachfrage auszugleichen. Primärregelung und die dabei abgegebene beziehungsweise aufgenommene primäre Regelleistung einerseits und die Sekundärregelung und die abgegebene beziehungsweise aufgenommene sekundäre Regelleistung unterscheiden sich in Bezug auf die Schnelligkeit bei der Bereitstellung. So muss bei einer Frequenzabweichung von +/- 200 mHz [Millihertz] innerhalb von 30 Sekunden die primäre Regelleistung bereitstellbar, also abgebbar oder aufnehmbar, sein, während die sekundäre Regelleistung innerhalb von höchstens 5 Minuten erbringbar sein muss. Die Minutenreserve dient zur Unterstützung und Entlastung der Sekundärregelleistung. Der Unterschied zwischen Primärregelung und Sekundärregelung liegt zunächst also in der Zeitskala der Bereitstellung. Darüber hinaus erfolgt die Erbringung der Primärregelleistung basierend auf der lokal gemessenen Frequenzabweichung und muss grundsätzlich zumindest für eine bestimmte Dauer erbringbar sein. Bei der sekundären Regelleistung gibt es hingegen keine zeitliche Beschränkung der Erbringung und der Vorgabewert wird zentral vom Übertragungsnetzbetreiber durch ein Regelsignal vorgegeben.

Im Rahmen des erfindungsgemäßen Verfahrens wird Regelleistung, insbesondere auf einer Zeitskala von wenigen Sekunden, insbesondere bereitstellbar innerhalb von 30 Sekunden, insbesondere primäre Regelleistung, zur Verfügung gestellt. Hierbei wird ein Kombinationskraftwerk zur Bereitstellung der Regelleistung eingesetzt. Unter Bereitstellung wird im Rahmen dieses Dokumentes sowohl das Abgeben von Regelleistung in das Wechselspannungsnetz als auch das Aufnehmen von Regelleistung aus dem Wechselspannungsnetz verstanden. Unter dem Aufnehmen von Regelleistung aus dem Wechselspannungsnetz wird auch die Reduktion von in das Wechselspannungsnetz abgegebener Leistung verstanden.

Das Kombinationskraftwerk umfasst dabei einen Batteriespeicher und mindestens ein Kraftwerk ausgewählt aus der Gruppe umfassend Gasturbinenkraftwerke, Gas- und Dampfturbinenkraftwerke. Diese Kraftwerke weisen jeweils eine Nennleistung auf, können aber auch bei anderen Leistungen, also mit einer Leistung unterhalb der Nennleistung und einer Leistung oberhalb der Nennleistung, betrieben werden.

Der Batteriespeicher ist aus Sekundärbatterien aufgebaut. Energie kann daher im Batteriespeicher gespeichert oder diesem entnommen werden. Der Batteriespeicher ist für die Bereitstellung der Regelleistung in einem Energieversorgungsnetz ausgelegt und bestimmt und weist insbesondere Leistungen von mindestens zwei Megawatt [MW] und Kapazitäten von mindestens mehreren Megawattstunden [MWh] auf.

Im hier beschriebenen Verfahren wird die Regelleistung aus dem Kombinationskraftwerk bereitgestellt. Die Bereitstellung erfolgt einem Frequenztrigger folgend. Ist die Frequenzabweichung, also die Differenz zwischen Sollfrequenz und Frequenz des Wechselspannungsnetzes, negativ und liegt betragsmäßig unterhalb der entsprechenden Triggerfrequenz, so wird die Regelleistung aus dem Batteriespeicher zur Verfügung gestellt. Dies bedeutet in diesem Falle, dass der Batteriespeicher Leistung aufnimmt, also geladen wird. Hierdurch kann eine Leistungsänderung des Kraftwerks mit gesteigertem Verschleiß vermieden werden. Beim Erreichen oder Überschreiten der Triggerfrequenz wird die Leistung des Kraftwerks angepasst, um weiterhin Regelleistung bereitstellen zu können. Die Triggerfrequenz ist dabei direkt proportional zu einem Quotienten aus der Batterieabgabeleistung und der Summe der Batterieabgabeleistung und der Überleistung aller Kraftwerke des Kombinationskraftwerkes. Dies stellt einerseits sicher, dass im Falle des Abrufs der Regelleistung ausreichend Regelleistung zur Verfügung steht. Andererseits wird die Abrufhäufigkeit des mindestens einen Kraftwerks möglichst gering gehalten, was den Verschleiß reduziert: Durch die Frequenztriggerung des Einsatzes des Kraftwerkes als Teil des Kombinationskraftwerks wird bei kleinen Frequenzabweichungen die Regelleistung vollständig aus dem Batteriespeicher bereitgestellt. Somit wird das Kraftwerk nur bei Frequenzabweichungen oberhalb der Triggerfrequenz zur Bereitstellung von Regelleistung herangezogen. Im Vergleichsfall, in dem der Batteriespeicher und das Kraftwerk als getrennte Einheiten für die Bereitstellung Regelleistung herangezogen werden, wird das Kraftwerk bei jeder Frequenzabweichung, die eine Bereitstellung von Regelleistung bedingt, zur Bereitstellung von Regelleistung eingesetzt. Das hier vorgestellte Verfahren reduziert dadurch den Verschleiß des Kraftwerks erheblich. Zudem kann die angeforderte Regelleistung zunächst schneller bereitgestellt werden, da die Bereitstellung aus dem Batteriespeicher im Vergleich zur Bereitstellung aus dem Kraftwerk praktisch trägheitsfrei erfolgt, während das Kraftwerk aufgrund des Einsatzes mechanischer Teile zur Leistungserzeugung oder -aufnahme eine Trägheit aufweist und daher für eine Änderung der Leistung, mit der das Kraftwerk betrieben wird, eine gewisse Zeit benötigt.

Bevorzugt wird die Regelleistung dann, wenn die Frequenzabweichung positiv ist und der Betrag der Frequenzabweichung kleiner ist als die Triggerfrequenz, die Regelleistung in dem Batteriespeicher aufgenommen, insbesondere durch ein Aufladen des Batteriespeichers. So kann ein Leistungsüberangebot im Wechselspannungsnetz vorteilhaft zum Aufladen des Batteriespeichers bei gleichzeitiger Bereitstellung von negativer Regelleistung genutzt werden.

Bevorzugt wird die Regelleistung dann, wenn die Frequenzabweichung positiv ist und insbesondere der Betrag der Frequenzabweichung größer ist als die Triggerfrequenz, die Regelleistung durch eine Reduktion der Leistung des Kraftwerks auf unterhalb der Nennleistung aufgenommen. Hierdurch wird die im Wechselspannungsnetz physikalisch verfügbare Leistung reduziert, somit negative Regelleistung bereitgestellt und dadurch die Frequenz des Wechselspannungsnetzes gesenkt.

Bevorzugt wird in Schritt d) bei einem betragsmäßigen Ansteigen der Frequenzabweichung über die Triggerfrequenz hinaus eine erste Triggerfrequenz und beim betragsmäßigen Absinken der Frequenzabweichung unter die Triggerfrequenz eine zweite Triggerfrequenz berücksichtigt, wobei ein Quotient aus der Differenz der ersten Triggerfrequenz und der Sollfrequenz und der Differenz der zweiten Triggerfrequenz und der Sollfrequenz ungleich 1 ist. Besonders bevorzugt ist der Quotient aus der Differenz der ersten Triggerfrequenz und der Sollfrequenz und der Differenz der zweiten Triggerfrequenz und der Sollfrequenz größer 1,05. Beispielsweise liegt die Differenz zwischen der ersten Triggerfrequenz und der Sollfrequenz bei 150 mHz und die Differenz zwischen der zweiten Triggerfrequenz und der Sollfrequenz bei 140 mHz und entsprechend der Quotient bei 1,0714. Ändert sich der Betrag der Frequenzabweichung so, dass diese von kleineren Werten steigt und daher die Regelleistung betragsmäßig erhöht werden muss, so wird dies als ein Anfahren der Regelleistung bezeichnet. Entsprechend wird ein Absinken des Betrags der Frequenzabweichung unter die Triggerfrequenz mit der Notwendigkeit, den Betrag der Regelleistung zu senken, als Abfahren bezeichnet. Bevorzugt wird beim Anfahren der Regelleistung eine andere Triggerfrequenz eingesetzt als beim Abfahren. Wenn nur eine Triggerfrequenz vorliegt, würde ein Schwanken der Frequenzabweichung um diese eine Triggerfrequenz herum zu einem wiederholten Starten der Bereitstellung von Regelleistung aus dem Kraftwerk und dem Beenden dieser Bereitstellung führen. Dies erschwert einerseits die Regelung und erhöht andererseits den Verschleiß des Kraftwerks. Durch die Trennung in erste und zweite Triggerfrequenz erhöht sich also einerseits die Regelbarkeit des Kombinationskraftwerks und andererseits wird der Verschleiß des Kraftwerks weiterhin reduziert. Ein Quotient von größer 1, insbesondere von mehr als 1,05 hat sich als besonders vorteilhaft herausgestellt, da dadurch sichergestellt ist, dass bei üblichen Schwankungen der Frequenzabweichung eine klare Regelstrategie vorliegt und ein übermäßiger Verschleiß des Kraftwerks vermieden wird.

Bevorzugt wird bei der Bereitstellung von Regelleistung die Trägheit des Kraftwerkes berücksichtigt und während eines Zeitraumes, den das Kraftwerk zum Ändern der bereitgestellten Leistung benötigt, entsprechende Leistung aus dem Batteriespeicher bereitgestellt. Da im Batteriespeicher Energie chemisch und nicht mechanisch gespeichert und abgegeben wird, ist die Energieabgabe und -aufnahme des Batteriespeichers praktisch trägheitsfrei. Dadurch ist die abgegebene Regelleistung summarisch näher an der basierend auf der Frequenzabweichung zur Verfügung zu stellenden Regelleistung im Falle sich ändernder Frequenzabweichungen, so dass die Regelleistung schneller im benötigten Umfang bereitgestellt werden kann. Dies gilt sowohl beim Anfahren als auch beim Abfahren der Regelleistung.

Bevorzugt weisen der Batteriespeicher und das Kraftwerk getrennte Netzeinspeisungspunkte auf. So lassen sich räumlich getrennte Batteriespeicher und Kraftwerke miteinander zu einem Kombinationskraftwerk zur Durchführung des hier beschriebenen Verfahrens kombinieren.

Bevorzugt wird im Falle einer negativen Frequenzabweichung nur dann Leistung aus dem Batteriespeicher zur Verfügung gestellt, wenn der Ladezustand des Batteriespeichers eine Abgabe der Leistung für mindestens einen vorgebbaren Zeitraum, insbesondere mindestens 15 Minuten oder mindestens 20 Minuten, erlaubt. Bevorzugt wird im Falle einer positiven Frequenzabweichung nur dann Leistung zum Laden des Batteriespeichers verwendet, wenn der Ladezustand des Batteriespeichers eine Aufnahme der Leistung für mindestens einen vorgebbaren Zeitraum, insbesondere für mindestens 15 Minuten oder mindestens 20 Minuten, erlaubt. Dies vereinfacht die Regelung, da nur dann der Batteriespeicher zur Abgabe beziehungsweise Aufnahme von Regelleistung eingesetzt wird, wenn der Ladezustand des Batteriespeichers dies ermöglicht, so dass eine spätere Neuverteilung der abzugebenden beziehungsweise aufzunehmenden Leistung auf das oder die Kraftwerk(e) des Kombinationskraftwerks vermieden werden kann.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1 sehr schematisch ein Kombinationskraftwerk aus Batteriespeicher und Kraftwerk;
Fig. 2 eine Darstellung des Frequenztriggers beim Anfahren der Regelleistung;
Fig. 3 eine Darstellung des Frequenztriggers beim Abfahren der Regelleistung;
Fig. 4 eine Beispiel der Festlegung der Triggerfrequenz in Abhängigkeit von der Batterieabgabeleistung des Batteriespeichers;
Fig. 5 ein Beispiel der Leistungsabgabe beziehungsweise Leistungsaufnahme des Kombinationskraftwerkes in Abhängigkeit von der Frequenz des Wechselspannungsnetzes;
Fig. 6 die Leistungsanforderung und die Leistungsabgabe des Kombinationsspeicherkraftwerks beim Anfahren der Bereitstellung einer Regelleistung; und
Fig. 7 die Leistungsanforderung und die Leistungsabgabe des Kombinationsspeicherkraftwerks beim Abfahren der Bereitstellung einer Regelleistung.

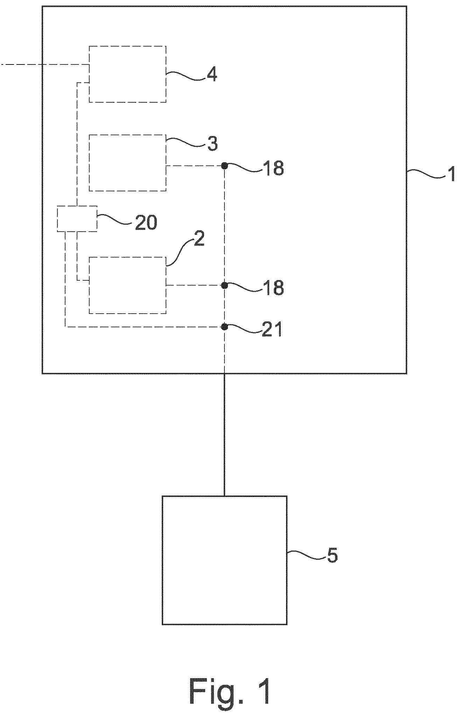

Fig. 1 zeigt ein Beispiel eines Kombinationskraftwerks 1. Dieses umfasst einen Batteriespeicher 2 und ein Kraftwerk 3, in diesem Beispiel ein Gas- und Dampfturbinenkraftwerk, bei dem eine Gasturbine als Verbrennungskraftmaschine genutzt wird, die mit einer Dampfturbine als Wärmekraftmaschine gekoppelt ist. Das Kraftwerk 3 weist eine Nennleistung auf. Die Nennleistung ist die Leistung, bei der das Kraftwerk 3 ohne Beeinträchtigung der vorgegebenen Lebensdauer des Kraftwerks 3 betrieben werden kann. Wird das Kraftwerk 3 bei der Nennleistung betrieben, so unterliegt dieses einem vorgegebenen Verschleißverhalten und weist insbesondere eine vorgegebene Betriebsdauer auf. Wird das Kraftwerk 3 oberhalb der Nennleistung betrieben, so steigt das Verschleißverhalten bzw. der Verschleiß des Kraftwerks pro Zeiteinheit an.

Weiterhin umfasst das Kombinationskraftwerk 1 eine erste Steuereinrichtung 4 und eine zweite Steuereinrichtung 20. Jede Steuereinrichtung 4, 20 ist dem Batteriespeicher 2 oder einem Kraftwerk 3 zugeordnet und mit diesem verbunden. Weiterhin sind die beiden Steuereinrichtungen 4, 20 miteinander verbunden. Das Kombinationskraftwerk 1 ist mit einem Wechselspannungsnetz 5 verbunden, wobei sowohl der Batteriespeicher 2 als auch das Kraftwerk 3 über Netzeinspeisungspunkte 18 mit dem Wechselspannungsnetz 5 verbindbar sind.

Das Wechselspannungsnetz 5 weist eine Sollfrequenz auf, die beispielsweise in Westeuropa bei 50 Hz liegt. Durch ein Ungleichgewicht zwischen der in das Wechselspannungsnetz 5 eingespeisten Leistung und der aus dem Wechselspannungsnetz 5 entnommenen Leistung kann es zu einer Änderung der Frequenz des Wechselspannungsnetzes 5 kommen. Bei einem Überangebot an Leistung kommt es zu einer Abweichung der Frequenz über die Sollfrequenz hinaus (Überfrequenz), während es bei einem Unterangebot an Leistung zu einer Abweichung der Frequenz unterhalb der Sollfrequenz kommt (Unterfrequenz).

Gewisse Schwankungen der Frequenz werden dann, wenn die Frequenz nicht zu weit von der Sollfrequenz abweicht, toleriert. Beispielsweise ist es in westeuropäischen Wechselspannungsnetzen 5 üblich, bei einer Änderung der Frequenz innerhalb von +/- 10 mHz [Millihertz] um die Sollfrequenz keine Maßnahmen zur Stabilisierung der Frequenz vorzunehmen. Dies berücksichtigt unter anderem die Messgenauigkeit von Messgeräten zur Bestimmung der Frequenz des Wechselspannungsnetzes. Wird die Abweichung von der Sollfrequenz größer, so sind Maßnahmen zu treffen. Insbesondere ist bei einer Unterfrequenz zusätzliche Leistung ins Wechselspannungsnetz 5 einzuspeisen, um die Frequenz zu erhöhen, während bei einer Überfrequenz weniger Leistung ins Wechselspannungsnetz 5 einzuspeisen ist oder mehr Leistung aus dem Wechselspannungsnetz 5 entnommen werden muss, beispielsweise, in dem man im Falle einer Überfrequenz entsprechend Leistung zum Laden einer Batterie, beispielsweise des Batteriespeichers 2, nutzt.

Die Steuereinrichtungen 4, 20 erhalten dabei Informationen über die aktuelle Frequenz des Wechselspannungsnetzes 5, beispielsweise von einem mit dem Wechselspannungsnetz 5 verbundenen Sensor 21 (nur für die zweite Steuereinrichtung 20 gezeigt), die Sollfrequenz des Wechselspannungsnetzes 5 ist vorgegeben. Übersteigt die Abweichung der Frequenz von der Sollfrequenz einen vorgebbaren Wert, so werden Batteriespeicher 2 und Kraftwerk 3 entsprechend durch die Steuereinrichtungen 4, 20 angesteuert, um dem Wechselspannungsnetz 5 Regelleistung, insbesondere primäre Regelleistung, bereitzustellen. Im Normalfall besteht eine Datenverbindung zwischen den Steuereinrichtungen 4, 20, so dass eine entsprechende Ansteuerung des Batteriespeichers 2 und des Kraftwerks 3 erfolgt. Wird diese Datenverbindung zwischen den Steuereinrichtungen 4, 20 getrennt, so regelt jede Steuereinrichtung 4, 20 basierend auf der lokal am Batteriespeicher 2 oder am Kraftwerk 3 gemessenen Frequenz des Wechselspannungsnetzes.

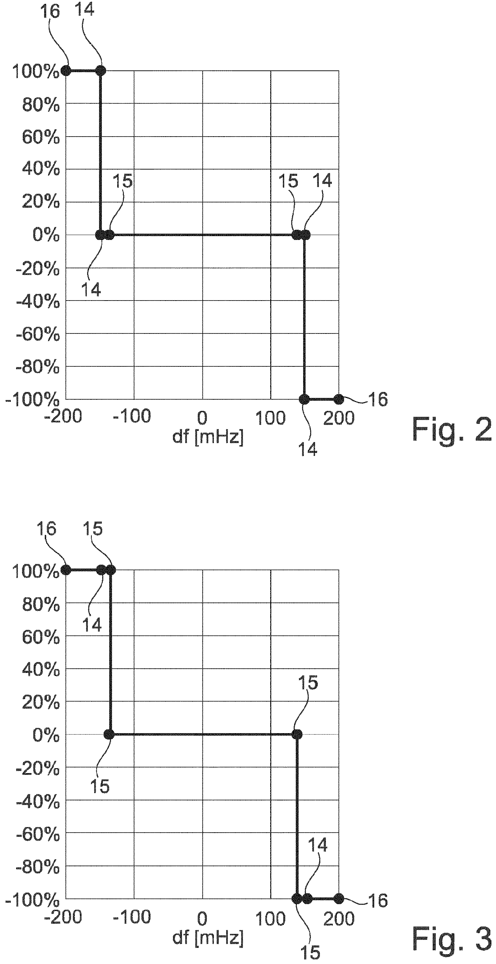

Fig. 2 zeigt eine Darstellung des Frequenztriggers beim Anfahren der Regelleistung und Fig. 3 entsprechend beim Abfahren der Regelleistung. Insbesondere handelt es sich dabei um eine Regelleistung, die kurzfristig bereitstellbar ist, insbesondere nach 30 Sekunden. Bevorzugt handelt es sich um eine primäre Regelleistung. Auf der Abszissenachse ist in den Fig. 2 und 3 die Frequenzabweichung df in mHz [Millihertz] aufgetragen. Die Frequenzabweichung df ist als die Differenz zwischen der Frequenz des Wechselspannungsnetzes 5 und der Sollfrequenz des Wechselspannungsnetzes 5 definiert. Wird die Frequenzabweichung df also beispielsweise negativ, so ist die Frequenz kleiner als die Sollfrequenz (Unterfrequenz), während bei positiven Frequenzabweichungen df die Frequenz größer als die Sollfrequenz ist (Überfrequenz). Bei einer Frequenzabweichung df von null entspricht die Frequenz des Wechselspannungsnetzes 5 exakt der Sollfrequenz.

Auf der Ordinatenachse der Fig. 2 und 3 wird angegeben, wann das Kraftwerk 3 zur bereitgestellten Regelleistung beiträgt. Hierbei ist bevorzugt eine Maximalleistung des Kraftwerks 3 vorgesehen, die zur Regelleistung beitragen kann. Auf der Ordinatenachse der Fig. 2 und 3 ist jeweils der prozentuale Anteile dieser Maximalleistung angegeben. Wenn das Kraftwerk 3 mit der Maximalleistung zur bereitgestellten Regelleistung beiträgt, liegt hier ein Wert von 100% im Falle einer Unterfrequenz und bei -100% im Falle einer Überfrequenz vor. Trägt das Kraftwerk 3 nicht zur Regelleistung bei, liegt ein Wert von 0% vor. Eine Abweichung von 0% erfolgt, wenn die Frequenzabweichung df die so genannte Triggerfrequenz über- oder unterschreitet. Im vorliegenden Beispiel liegen asymmetrische Triggerfrequenzen vor. Im Anfahrfall (Fig. 2), also beim Bereitstellen von Regelleistung durch das Kombinationskraftwerk 1, liegt eine erste Triggerfrequenz 14 vor, die im vorliegenden Beispiel bei 150 mHz liegt. Überschreitet der Betrag der Frequenzabweichung df also die erste Triggerfrequenz 14, so wird im Falle von Unterfrequenzen Leistung zur Bereitstellung von Regelleistung aus dem Kraftwerk 3 entnommen beziehungsweise im Falle einer Überfrequenz die Leistung des Kraftwerks 3 zur Bereitstellung von Regelleistung reduziert.

Im Abfahrfall (Fig. 3), also bei der Beendigung der Bereitstellung von Leistung aus dem Kraftwerk 3, erfolgt eine Änderung des Zustandes des Kraftwerks 3, wenn die Frequenzabweichung df eine zweiten Triggerfrequenz 15 unterschreitet. Im vorliegenden Beispiel beträgt die zweite Triggerfrequenz 15 138 mHz. Fig. 2 und 3 zeigen weiterhin noch die maximal ausgleichbare Frequenzabweichung 16. Auf diese maximal ausgleichbare Frequenzabweichung 16 ist das Kombinationskraftwerk 1 ausgelegt. Es kann also die der maximal ausgleichbaren Frequenzabweichung 16 entsprechende maximale Regelleistung für einen vorgebbaren Zeitraum, insbesondere von mindestens 15 Minuten oder sogar mindestens 20 Minuten, bereitstellen.

Die Berücksichtigung zweier Triggerfrequenzen 14, 15, die sich für den Anfahrfall (erste Triggerfrequenz 14) und den Abfahrfall (zweite Triggerfrequenz 15) unterscheiden, verbessert das Regelverhalten des Kombinationskraftwerkes 1 insbesondere für den Fall, dass die Frequenz des Wechselspannungsnetzwerkes 5 in engen Bereichen (z.B. um ein bis zwei Millihertz) um die Triggerfrequenz schwankt. Ohne zwei unterschiedliche Triggerfrequenzen 14, 15 für den Anfahr- und den Abfahrfall würde dies sonst dazu führen, dass immer wieder die Leistung des Kraftwerkes 3 geändert wird, ohne, dass sich die Regelleistung, die das Kombinationskraftwerk 1 bereitstellt, wesentlich ändert.

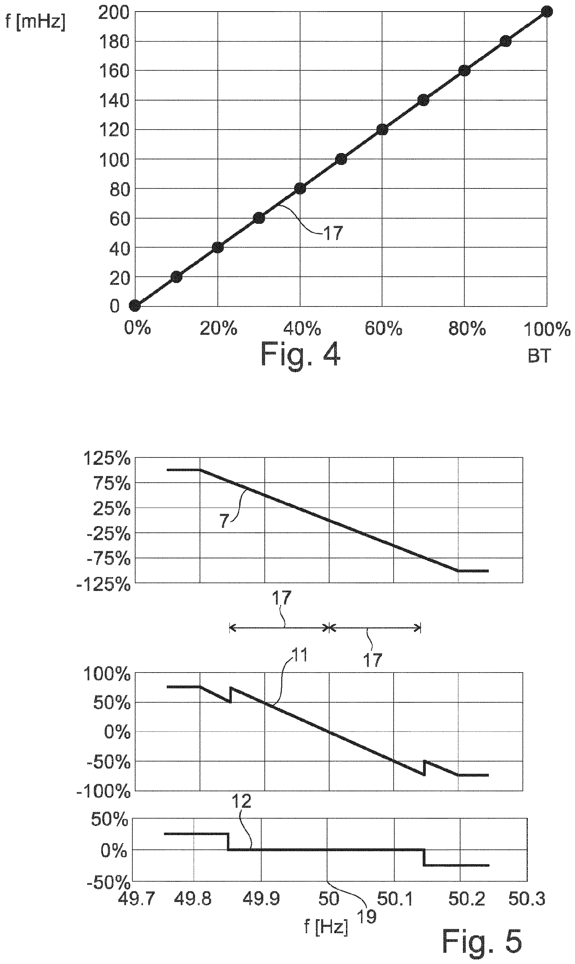

Die Triggerfrequenzen 14, 15 werden dabei anhand der Möglichkeiten des Batteriespeichers 2 und des Kraftwerks 3 beziehungsweise der Kraftwerke 3, Leistung als Teil der zur bereitgestellten Regelleistung bereitzustellen, bestimmt, wie dies beispielhaft in Fig. 4 gezeigt ist. Fig. 4 zeigt dabei eine Triggerfrequenz 17, wobei auf der Ordinatenachse eine Frequenz f in mHz und auf der Abszissenachse ein Leistungsanteil BT in % angegeben ist.

Der Batterieanteil BT wird dabei wie folgt bestimmt. Der Batteriespeicher 2 weist eine maximale Leistung und eine Batterieabgabeleistung auf. Die maximale Leistung ist physikalisch vorgegeben und hängt vom Aufbau des Batteriespeichers 2, sowie von anderen Faktoren wie beispielsweise dem Zustand des Batteriespeichers 2 ab. Die Batterieabgabeleistung des Batteriespeichers 2 ist die Leistung, die zur Bereitstellung der Regelleistung im Rahmen des hier beschriebenen Verfahrens festgelegt wurde und beinhaltet auch die Leistung, die für das Nachlademanagement berücksichtigt wird. Die Batterieabgabeleistung ist damit kleiner der maximalen Leistung des Batteriespeichers 2.

Das mindestens eine Kraftwerk 3 weist eine Nennleistung auf und eine Überleistung. Das Kraftwerk 3 ist dabei auf den Betrieb bei der Nennleistung ausgelegt. Ein Betrieb des Kraftwerks 3 oberhalb der Nennleistung ist möglich, jedoch führt diese zu einem deutlich erhöhten Verschleiß. Die dadurch generierte Leistung wird auch zur Bereitstellung von Regelleistung eingesetzt. Dabei wird ein maximaler zur Bereitstellung von Regelleistung einzusetzender Leistungsbetrag festgelegt. Hiernach kann das Kraftwerk 3 also maximal mit dem entsprechenden Leistungsbetrag betrieben werden. Die Differenz zwischen diesem Leistungsbetrag und der Nennleistung wird als Überleistung bezeichnet. Die Überleistung des Kraftwerks 3 ist also die Leistung, die das Kraftwerk 3 maximal für die Bereitstellung von Regelleistung zur Verfügung stellen kann.

Der Batterieanteil BT wird berechnet als der Quotient aus der Batterieabgabeleistung des Batteriespeichers 2 und der Summe der Batterieabgabeleistung des Batteriespeichers 2 und aller Überleistungen der Kraftwerke 3 im Kombinationskraftwerk 1. Zum Beispiel weist das Kombinationskraftwerk 1 einen Batteriespeicher 2 auf, der eine maximale Leistung von 90 MW [Megawatt] und eine Batterieabgabeleistung von 60 MW aufweist. Weiterhin umfasst das Kombinationskraftwerk 1 ein Gas- und Dampfturbinenkraftwerk mit einer Überleistung von 20 MW. Dann beträgt der entsprechende Batterieanteil des Kombinationskraftwerks 1 0,75 oder 75%. Hieraus ergibt sich nach Fig. 4 eine Triggerfrequenz 17 von 150 mHz. Im Falle asymmetrischer Triggerfrequenzen 14, 15 wird die jeweils andere Triggerfrequenz so gewählt, dass sie sich genügend von der Triggerfrequenz unterscheiden, dass sich der positive Effekt auf das Regelverhalten wie oben beschrieben einstellt. Insbesondere kann sich die Differenz der anderen Triggerfrequenz zur Sollfrequenz um mindestens 5% von der Differenz der ersten Triggerfrequenz zur Sollfrequenz unterscheiden.

Für eine symmetrische Triggerfrequenz 17 ergibt sich das in Fig. 5 gezeigte Verhalten. Fig. 5 zeigt in der obersten Darstellung die abgegebene Regelleistung 7 des Kombinationskraftwerks 1 in Abhängigkeit von der Frequenz f des Wechselspannungsnetzes 5. Die mittlere Darstellung zeigt eine Leistungsabgabe 11 des Batteriespeichers 2 als Beitrag zur Regelleistung 7, während die untere Darstellung eine Leistungsabgabe 12 des Kraftwerks 3 als Beitrag zur Regelleistung 7 zeigt. Auf der Abszissenachse ist jeweils die Frequenz f des Wechselspannungsnetzes 5 in Hz aufgetragen, auf der Ordinatenachse der jeweilige Anteil an der maximal möglichen Regelleistung in %.

Im Folgenden wird zunächst der Fall einer Unterfrequenz betrachtet. Sinkt die Frequenz f von 50 Hz ausgehend, so wird zunächst lediglich Leistung vom Batteriespeicher 2 an das Wechselspannungsnetz abgegeben (vgl. die Leistungsabgabe 11 des Batteriespeichers 2). Wird die Frequenz erreicht, die der Sollfrequenz 19 abzüglich der Triggerfrequenz 17 entspricht, im vorliegenden Beispiel also 49,85 Hz, so wird das Kraftwerk 3 mit seiner entsprechenden Überleistung genutzt. Die Leistungsabgabe 12 des Kraftwerks 3 zur Regelleistung 7 steigt sprunghaft an, während gleichzeitig die Leistungsabgabe 11 des Batteriespeichers 2 sprunghaft sinkt, um eine gleichmäßige Steigerung der Regelleistung 7 entsprechend der Abweichung von der Sollfrequenz 19 zu ermöglichen. Hier wird insbesondere das An- und Abfahrverhalten des Kraftwerks 3 durch die zweite Steuereinrichtung 20 berücksichtigt. Sinkt die Frequenz f weiter, so wird die Leistungsabgabe 11 des Batteriespeichers weiterhin erhöht, bis beim Erreichen einer Frequenz von 49,8 Hz die Regelleistung 7 trotz sinkender Frequenz konstant bei 100% der maximal durch das Kombinationskraftwerk 1 abgebbaren Regelleistung liegt. In diesem Bereich entspricht die Leistungsabgabe 11 des Batteriespeichers 2 genau dem Batterieanteil BT.

Im Überfrequenzbereich wird für Frequenzen zwischen der Sollfrequenz 19 des Wechselspannungsnetzes 5 und der Summe der Sollfrequenz 19 und der Triggerfrequenz 17 die aus dem Wechselspannungsnetz 5 aufnehmbare Regelleistung im Batteriespeicher 2 gespeichert. Wächst die Frequenz auf Werte oberhalb der Summe aus Sollfrequenz 19 und Triggerfrequenz 17, so wird die Leistung des Kraftwerkes 3 auf eine Leistung unterhalb der Nennleistung reduziert. Die Leistungsabgabe 12 des Kraftwerks 3 zur Regelleistung 7 sinkt in der Frequenzdarstellung sprunghaft ab, während gleichzeitig die Leistungsabgabe 11 des Batteriespeichers 2 sprunghaft ansteigt, um eine gleichmäßige Steigerung der aufgenommenen Regelleistung 7 entsprechend der Abweichung von der Sollfrequenz 19 zu ermöglichen.

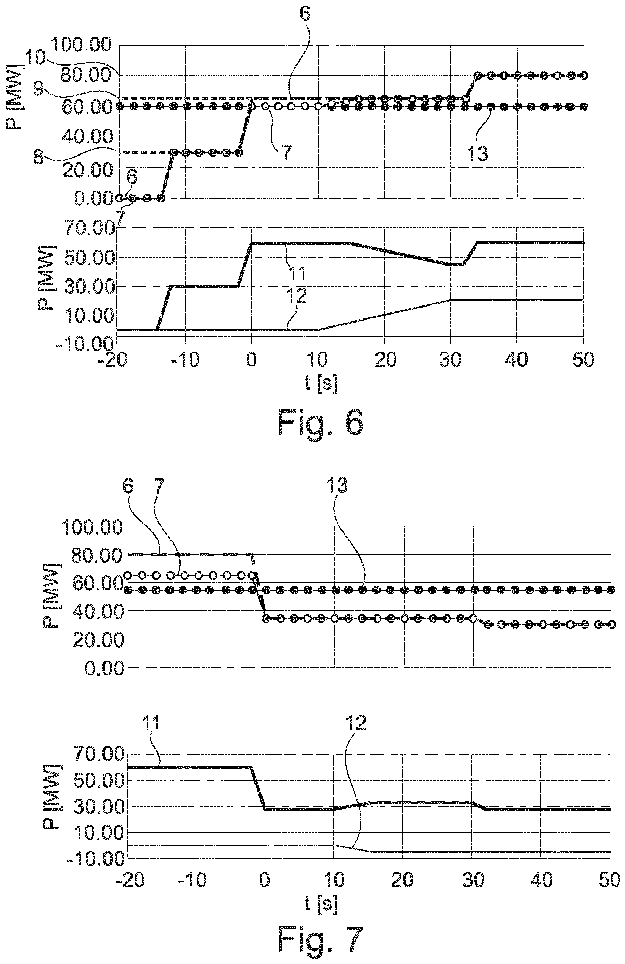

Fig. 6 und 7 zeigen beispielhaft die zeitliche Leistungsanforderung und Leistungsabgabe des Kombinationsspeicherkraftwerks 1 einerseits beim Anfahren zur Bereitstellung einer Regelleistung (Fig. 6) und andererseits beim Abfahren (Fig. 7). Fig. 6 und 7 weisen jeweils zwei Darstellungen auf. Die jeweils obere Darstellung zeigt das Verhalten des Kombinationskraftwerks 1, während die jeweils untere Darstellung das Verhalten des Batteriespeichers 2 und des Kraftwerks 3 zeigen. In beiden Darstellungen ist jeweils auf der Abszissenachse eine Zeit t in Sekunden aufgetragen, während auf der Ordinatenachse eine Leistung P in Megawatt aufgetragen ist.

In Fig. 6 wird das Anfahrverhalten des Kombinationskraftwerks 1 beim Abgeben von Regelleistung beschrieben. Die entsprechende Frequenz des Wechselspannungsnetzwerkes 5 ist eine Unterfrequenz, so dass Regelleistung ins Wechselspannungsnetz 5 eingespeist werden muss, um die Frequenz in Richtung der Sollfrequenz 19 zu verändern. Aus der Frequenzdifferenz df ergibt sich eine angefragte Regelleistung 6, die zur Veränderung der Frequenz auf die Sollfrequenz 19 notwendig ist. Diese ist je nach Frequenzabweichung df zwischen der Frequenz des Wechselspannungsnetzes 5 und der Sollfrequenz 19 des Wechselspannungsnetzes 5 zeitlich variabel. Weiterhin zeigt die obere Darstellung der Fig. 6 auch die durch das Kombinationskraftwerk 2 abgegebene Regelleistung 7, diese sollte möglichst kurzfristig an die angefragte Regelleistung 6 angepasst werden, um möglichst schnell die Frequenz des Wechselspannungsnetzes 5 wieder in den Bereich der Sollfrequenz 19 zu verändern.

Im Bereich von 20 s [Sekunden] bis 14 s vor dem Nullpunkt der Zeitskala (im Bereich von -20 s bis -14 s) wird eine Regelleistung 6 in Höhe von null Megawatt angefragt. Im Bereich zwischen -14 s und -12 s steigt die angefragte Regelleistung 6 auf einen ersten Leistungsabfragewert 8 von in diesem Beispiel 30 Megawatt, im Bereich zwischen -2 s und 0 s auf einen zweiten Leistungsabfragewert 9 von 62 Megawatt und im Bereich zwischen 32 s und 34 s auf einen dritten Leistungsabfragewert 10 von in diesem Beispiel 80 Megawatt.

Die untere Darstellung der Fig. 6 zeigt die Leistungsabgabe 11 des Batteriespeichers 2 und die Leistungsabgabe 12 des Kraftwerks 3 jeweils über die Zeit t. Bevorzugt handelt es sich bei dem Kraftwerk 3 um ein Gas- und Dampfturbinenkraftwerk, die Leistungsabgabe 12 ist definiert als Abweichung von der Nettoleistung des Kraftwerks 3, also als der Beitrag, den das Kraftwerk 3 zur Bereitstellung der Regelleistung 7 stellen kann.

So lange die angefragte Regelleistung 6 bei null liegt, liegt sowohl die Leistungsabgabe 11 des Batteriespeichers 2 als auch die Leistungsabgabe 12 des Kraftwerks 3 bei null. Sobald die angefragte Regelleistung 6 auf den ersten Leistungsabgabewert 8 steigt, wird diese über die Leistungsabgabe 11 des Batteriespeichers 2 bereitgestellt. Die Leistungsabgabe 11 des Batteriespeichers erfolgt praktisch trägheitslos, der Batteriespeicher 2 ist in der Lage, die angefragte Regelleistung 7 unmittelbar zur Verfügung zu stellen. Zum Zeitpunkt t = 0 erreicht die angefragte Regelleistung 6 einen Triggerpunkt 13. Dieser Triggerpunkt 13 wird erreicht bei der ersten Triggerfrequenz 14.

Erreicht oder übersteigt die angefragte Regelleistung 6 den Triggerpunkt, so wird die Leistung des Kraftwerks 3 erhöht. Die Leistung des Kraftwerks 3 kann unmittelbar von der Nennleistung um die Überleistung erhöht werden (vgl. Fig. 5), alternativ kann sie auch um einen Betrag unterhalb der Überleistung erhöht werden. Üblicherweise hat ein konventionelles Kraftwerk wie beispielsweise ein Gasturbinenkraftwerk oder ein Gas- und Dampfturbinenkraftwerk eine gewisse Trägheit, die unter anderem in den eingesetzten mechanischen Komponenten begründet liegt. Beispielsweise braucht die Änderung der Drehzahl einer Turbine und die Änderung der zugeführten Gasmenge eine gewisse Anfahrzeit, beispielsweise etwa 10 s. Insofern ist die Bereitstellung von Regelleistung 7 aus einem Kraftwerk 3 mit Trägheit behaftet. Eine Verfahrensstrategie besteht darin, in dieser Anfahrzeit die Leistungsabgabe 11 des Batteriespeichers 2 zu erhöhen und diese dann abzusenken, wenn das Kraftwerk 3 die entsprechende Leistungsabgabe 12 zeigt (vgl. Fig. 5). Alternativ ist eine Verfahrensführung wie in Fig. 6 gezeigt möglich, in dem die Trägheit des Kraftwerks 3 in Kauf genommen wird und eine langsamere Anpassung der abgegebenen Regelleistung 7 an die angefragte Regelleistung 6 erfolgt. Dies ist tolerabel, wenn die Anpassung auf einer kurzen Zeitskala erfolgt, beispielsweise in weniger als 30 s und der Batteriespeicher 2 nicht schneller seine Leistungsabgabe 11 reduziert als das Kraftwerk 3 seine Leistungsabgabe 12 erhöht.

Wie Fig. 6 weiterhin zeigt, wird die Leistungsabgabe 11 des Batteriespeichers 2 reduziert, wenn das Kraftwerk 3 die volle Überleistung abgibt. Die Summe der Leistungsabgabe 11 des Batteriespeichers 2 und der Leistungsabgabe 12 des Kraftwerks 3 entspricht der abgegebenen Regelleistung 7 und im eingefahrenen Zustand (vgl. z.B. t >= 34 s) auch der angeforderten Regelleistung 6.

Analog zur hier gezeigten Situation bei einer Unterfrequenz verhält sich das Kombinationskraftwerk 1 auch im Falle einer Überfrequenz. Hier wird bis zum Erreichen der Triggerfrequenz 14 des Triggerpunktes 13 zunächst Energie im Batteriespeicher 2 gespeichert und damit Regelleistung 7 aus dem Wechselspannungsnetz 5 entnommen. Wird die Triggerfrequenz 14also der Triggerpunkt 13 überschritten, wird die Leistung des Kraftwerks 3 auf unterhalb der Nennleistung gedrosselt und so die im Wechselspannungsnetz 5 verfügbare Leistung reduziert.

Fig. 7 zeigt das Abfahren der Regelleistung 7 im Falle einer Unterfrequenz. In diesem Beispiel ist für eine Zeit t<0 die angefragte Regelleistung 6 größer als die bereitgestellte Regelleistung 7. Für t <= -2 s liegt die Leistungsabgabe 11 des Batteriespeicher 2 bei einem konstanten Wert wie auch die Leistungsabgabe 12 des Kraftwerks 3. Die Summe dieser Werte ergibt den konstanten Wert der Regelleistung 7, den das Kombinationskraftwerk 1 abgibt. Zum Zeitpunkt t = -2 s sinkt die angefragte Regelleistung 6 auf einen Wert unterhalb eines Triggerpunkts 13, der hier der zweiten Triggerfrequenz 15 entspricht. Sogleich wird der sinkenden angefragten Regelleistung 6 folgend die Leistungsabgabe 11 des Batteriespeichers 2 abgesenkt. Gleichzeitig wird entsprechend eine Leistungsabsenkung des Kraftwerks 3 angestoßen, die aufgrund der Trägheit des Kraftwerks 3 erst ab t = 10 s eine Absenkung der Leistungsabgabe 12 bewirkt. Um den ab t=10 s folgenden Leistungsabfall der Leistungsabgabe 12 des Kraftwerks 3 auszugleichen, um weiterhin die Abgabe der Regelleistung 7 des Kombinationskraftwerks 1 zu gewährleisten, die nunmehr ab t = 0 s der angefragten Regelleistung 6 entspricht, steigt dann die Leistungsabgabe 11 des Batteriespeichers 2 erneut an. Bei t = 30 s sinkt die angefragte Regelleistung 6 weiterhin ab. Trägheitsfrei wird umgehend die Leistungsabgabe 11 des Batteriespeichers 2 entsprechend abgesenkt.

Das erfindungsgemäße Verfahren zur Bereitstellung von Regelleistung 7, insbesondere primärer Regelleistung 7, in ein Wechselspannungsnetz 5 stellt diese aus einem Kombinationskraftwerk 1 aus einem Batteriespeicher 2 und mindestens einem Kraftwerk 3 wie einem Gas- und Dampfturbinenkraftwerk zur Verfügung. Die Abgabe der primären Regelleistung 7 ist durch einen Frequenztrigger mit einer Triggerfrequenz 17 gesteuert. Liegt eine Abweichung der Frequenz des Wechselspannungsnetz 5 innerhalb eines durch die Triggerfrequenz 17 symmetrisch um die Sollfrequenz 19 aufgespannten Intervalls, erfolgt die primäre Regelleistung 7 durch die Leistungsabgabe 11 des Batteriespeichers 2. Weicht die Frequenz in größerem Umfang von der Sollfrequenz 19 ab, so trägt auch die Leistungsabgabe 12 des Kraftwerks 3 zur Regelleistung 7 bei. Durch diese Strategie wird das Kraftwerk 3 seltener in Leistungsbereichen mit erhöhtem Verschleiß betrieben. Gleichzeitig erlaubt die Bereitstellung der Regelleistung 7 aus der Leistungsabgabe 11 des Batteriespeichers 2 eine schnellere Anpassung der abgegebenen Regelleistung 7 an die basierend auf der Frequenzdifferenz zur Sollfrequenz 19 notwendigen angefragten Regelleistung 6.

### Bezugszeichen

- 1: Kombinationskraftwerk
- 2: Batteriespeicher
- 3: Kraftwerk
- 4: Erste Steuereinrichtung
- 5: Wechselspannungsnetz
- 6: angefragte Regelleistung
- 7: Regelleistung
- 8: erster Leistungsabfragewert
- 9: zweiter Leistungsabfragewert
- 10: dritter Leistungsabfragewert
- 11: Leistungsabgabe des Batteriespeichers
- 12: Leistungsabgabe des Kraftwerkes
- 13: Triggerpunkt
- 14: erste Triggerfrequenz
- 15: zweite Triggerfrequenz
- 16: maximal ausgleichbare Frequenzabweichung
- 17: Triggerfrequenz
- 18: Netzeinspeisungspunkt
- 19: Sollfrequenz
- 20: Zweite Steuereinrichtung
- 21: Sensor

- BT: Batterieanteil
- df: Frequenzabweichung
- f: Frequenz
- P: Leistung
- t: Zeit

## Patentansprüche

1. Verfahren zum Bereitstellen einer Regelleistung (7) zum Regeln der Frequenz (f) in einem Wechselspannungsnetz (5) mit einer Sollfrequenz (19),
bei dem die Regelleistung (7) aus einem Kombinationskraftwerk (1) bereitgestellt wird, welches einen Batteriespeicher (2) und mindestens eines der folgenden Kraftwerke (3) umfasst: A) ein Gasturbinenkraftwerk und B) ein Gas- und Dampfturbinenkraftwerk;
wobei jedes der Kraftwerke (3) eine kraftwerkindividuelle Nennleistung und eine zeitweise abrufbare Überleistung aufweist,
wobei der Batteriespeicher (2) eine Batterieabgabeleistung aufweist, die als Beitrag zur abgegebenen Regelleistung (7) zur Verfügung stellbar ist, wobei für jedes Kraftwerk (3) die Überleistung als Beitrag zur abgegebenen Regelleistung (7) zur Verfügung stellbar ist,
wobei eine Triggerfrequenz (14, 15, 17) definiert wird, die direkt proportional zu einem Quotienten aus der Batterieabgabeleistung und der Summe der Batterieabgabeleistung und der Überleistung aller Kraftwerke (3) des Kombinationskraftwerkes (1) ist,
umfassend die folgenden Schritte:
a) Bestimmung der Frequenz (f) des Wechselspannungsnetzes (5);
b) Bestimmung der Frequenzabweichung (df) durch Bildung der Differenz aus Frequenz (f) und Sollfrequenz (19);
c) Vergleich der Frequenzabweichung (df) mit der Triggerfrequenz (14, 15, 17);
d) Abgeben beziehungsweise Aufnehmen der Regelleistung (7) durch beziehungsweise im Kombinationskraftwerk (1), in Abhängigkeit vom Vergleich der Frequenzabweichung (df) mit der Triggerfrequenz (14, 15, 17),
- wobei dann, wenn die Frequenzabweichung (df) negativ ist und der Betrag der Frequenzabweichung (df) kleiner ist als die Triggerfrequenz (14, 15, 17), die Regelleistung (7) aus dem Batteriespeicher (2) zur Verfügung gestellt wird,
- wobei dann, wenn die Frequenzabweichung (df) negativ ist und der Betrag der Frequenzabweichung (df) die Triggerfrequenz(14, 15, 17) erreicht oder übersteigt, mindestens eines der Kraftwerke (3) mit einer Leistung oberhalb seiner Nennleistung betrieben wird.

2. Verfahren nach Anspruch 1, bei dem die Regelleistung (7) dann, wenn die Frequenzabweichung (df) positiv ist und der Betrag der Frequenzabweichung (df) kleiner ist als die Triggerfrequenz (14, 15, 17), die Regelleistung (7) in dem Batteriespeicher (2) aufgenommen wird.

3. Verfahren nach einem der vorhergehenden Ansprüche, bei dem die Regelleistung (7) dann, wenn die Frequenzabweichung (df) positiv ist und insbesondere der Betrag der Frequenzabweichung (df) größer ist als die Triggerfrequenz (14, 15, 17), die Regelleistung (7) durch eine Reduktion der Leistung des Kraftwerks (3) auf unterhalb der Nennleistung aufgenommen wird.

4. Verfahren nach einem der vorhergehenden Ansprüche, bei dem in Schritt d) bei einem betragsmäßigen Ansteigen der Frequenzabweichung (df) über die Triggerfrequenz (14, 15, 17) hinaus eine erste Triggerfrequenz (14) und beim betragsmäßigen Absinken der Frequenzabweichung (df) unter die Triggerfrequenz (14, 15, 17) eine zweite Triggerfrequenz (15) berücksichtigt wird, wobei ein Quotient aus der Differenz der ersten Triggerfrequenz (14) und der Sollfrequenz und der Differenz der zweiten Triggerfrequenz (15) und der Sollfrequenz ungleich 1 ist.

5. Verfahren nach Anspruch 4, bei dem der Quotient aus der Differenz der ersten Triggerfrequenz (14) und der Sollfrequenz und der Differenz der zweiten Triggerfrequenz (15) und der Sollfrequenz größer als 1 und insbesondere größer als 1,05.

6. Verfahren nach einem der vorhergehenden Ansprüche, bei dem bei der Bereitstellung von Regelleistung (7) die Trägheit des Kraftwerkes (3) berücksichtigt wird und während eines Zeitraumes, den das Kraftwerk (3) zum Ändern der bereitgestellten Leistung benötigt, entsprechende Leistung aus dem Batteriespeicher (2) bereitgestellt wird.

7. Verfahren nach eine der vorhergehenden Ansprüche, bei dem der Batteriespeicher (2) und das Kraftwerk (3) getrennte Netzeinspeisungspunkte (18) aufweisen.

8. Verfahren nach einem der vorhergehenden Ansprüche, bei dem im Falle einer negativen Frequenzabweichung (df) nur dann Leistung aus dem Batteriespeicher (2) zur Verfügung gestellt wird, wenn der Ladezustand des Batteriespeichers (2) eine Abgabe der Leistung für mindestens einen vorgebbaren Zeitraum, insbesondere mindestens 15 Minuten oder mindestens 20 Minuten, erlaubt.

9. Verfahren nach einem der Ansprüche 2 bis 8, bei dem im Falle einer positiven Frequenzabweichung (df) nur dann Leistung zum Laden des Batteriespeicher (2) verwendet wird, wenn der Ladezustand des Batteriespeichers (2) eine Aufnahme der Leistung für mindestens einen vorgebbaren Zeitraum, insbesondere mindestens 15 Minuten oder mindestens 20 Minuten, erlaubt.
